# EUROPÄISCHE PATENTANMELDUNG

(11) **EP 2 189 786 A2**
(43) Veröffentlichungstag der Anmeldung: **26.05.2010**
(21) Anmeldenummer: 09174916.8
(22) Anmeldetag: 03.11.2009
(51) Int. Cl.: G01N 25/72, B23K 31/12

(54) **Verfahren und Vorrichtung zur zerstörungsfreien Qualitätsbestimmung einer Schweißnaht und Schweißvorrichtung**

(30) Priorität: 20.11.2008 DE 102008058187
(71) Anmelder: Benteler Automobiltechnik GmbH, 33102 Paderborn (DE)
(72) Erfinder: Andres, Thorsten, Dr., 33106, Paderborn (DE); Przybylski, Sven, 33104, Paderborn (DE)
(74) Vertreter: Dantz, Jan Henning

(57) **Zusammenfassung**

Bei einem Verfahren zur zerstörungsfreien Qualitätsbestimmung einer ein erstes Bauteil (1) und ein zweites Bauteil (2) verbindenden Schweißnaht (3) werden Oberflächentemperaturen der bei einem unmittelbar vorausgehenden Schweißvorgang erzeugten Schweißnaht (3) sowie der der Schweißnaht (3) benachbarten durch den Schweißvorgang erwärmten Bereiche des ersten Bauteils (1) und des zweiten Bauteils (2) gemessen, es wird ein ortsabhängige Wärmeprofil aus den gemessenen Oberflächentemperaturen erstellt und das erfasste Wärmeprofil wird mit einem Sollprofil verglichen. Des weiteren wird eine Vorrichtung zur zerstörungsfreien Qualitätsbestimmung und eine Schweißvorrichtung beschrieben.

## Beschreibung

Die vorliegende Erfindung betrifft ein Verfahren sowie eine Vorrichtung zur zerstörungsfreien Qualitätsbestimmung einer Schweißnaht und eine Schweißvorrichtung.

Aus dem Stand der Technik sind verschiedene Verfahren und Vorrichtung zur zerstörungsfreien Qualitätsbestimmung von Schweißnähten bekannt. Beispielsweise werden bei der Ultraschallprüfung akustische Impulse durch eine Schweißnaht eines Bauteils geschickt, deren resultierende Echos über eine Laufzeitverzögerung ausgewertet werden. Auch aus einer Vermessung der Geometrie von Schweißnähten lassen sich Rückschlüsse auf die Qualität der Schweißnaht ziehen. Dazu wird insbesondere die Lasertriangulation (Laserlichtschnittverfahren) verwendet. Weitere bekannte Techniken sind beispielsweise Wirbelstromverfahren oder die Schweißnahtcharakterisierung mittels Röntgenstrahlung.

Der Einsatz der genannten Verfahren zur Qualitätskontrolle hängt von Faktoren wie dem gesuchten Fehlertyp, der Zugänglichkeit der Schweißnaht, etc. ab. Trotz der Vielfältigkeit bereits bekannter zerstörungsfreier Prüfverfahren werden auch zerstörende Kontrollprüfverfahren weiterhin häufig eingesetzt.

Nachteilig an den o.g. Verfahren zur Qualitätsbestimmung von Schweißnähten ist, dass diese nicht während des Schweißprozesses durchgeführt werden können. Auch der Zeitbedarf dieser Prüfvorgänge ist meist größer als die Taktzeit der verschweißten Bauteile, was eine Prüfung jedes einzelnen Bauteils nahezu unmöglich macht. Außerdem lassen sich mit vielen der o.g. Methoden nicht alle Fehlertypen detektieren. Dem Informationsgehalt bestehender Auswerteverfahren zur Schweißnahtcharakterisierung fehlt allgemein eine Aussage zum sogenannten Bindefehler. Ein solcher Fehler kann selbst bei identischen elektrischen Betriebswerten der Schweißsteuerung auftreten.

Aufgabe der vorliegenden Erfindung ist es daher, ein Verfahren sowie eine Vorrichtung zur zerstörungsfreien Qualitätsbestimmung von Schweißnähten sowie eine Schweißvorrichtung zu schaffen, mit der die Qualität der Schweißnähte bei jedem der verschweißten Bauteile prüfbar ist, ohne die Taktzeiten verlängern zu müssen.

Diese Aufgabe wird mit einem Verfahren zur zerstörungsfreien Qualitätsbestimmung von Schweißnähten mit den Merkmalen des Anspruchs 1, einer Vorrichtung zur zerstörungsfreien Qualitätsbestimmung von Schweißnähten mit den Merkmalen des Anspruchs 7 sowie eine Schweißvorrichtung mit den Merkmalen des Anspruchs 14 gelöst.

Vorteilhafte Weiterbildungen sind den Unteransprüchen zu entnehmen.

Erfindungsgemäß werden bei einem Verfahren zur zerstörungsfreien Qualitätsbestimmung von Schweißnähten folgende Schritte durchgeführt:
- Messen der Oberflächentemperaturen der bei einem unmittelbar vorausgehenden Schweißvorgang erzeugten Schweißnaht sowie der der Schweißnaht benachbarten durch den Schweißvorgang erwärmten Bereiche der zu fügenden Bauteile;
- Erstellen eines ortsabhängigen Wärmeprofils aus den gemessenen Oberflächentemperaturen und
- Vergleich des erfassten Wärmeprofils mit einem Sollprofil.

Beim Fügen von Materialien durch Schweißvorgänge wird durch die Schweißnaht lokal Energie in Form von Wärme in das umliegende Material eingebracht. Die Ausbreitung dieser Wärme in die Schweißnahtumgebung lässt sich anhand der Oberflächentemperatur beobachten. Die Einkopplung bzw. Effizienz der Wärmeleitung hängt direkt von Schweißnahtparametern wie der Anbindung an das umgebende Material, die Position der Schweißnaht relativ zu den zu fügenden Bauteilen sowie von dem anfänglichen Spaltmaß oder der Orientierung der zu fügenden Bauteile relativ zueinander ab. Daher kann mit dem erfindungsgemäßen Verfahren in zuverlässiger Weise eine Qualitätsbestimmung der Schweißnaht durchgeführt werden. Nur in Verbindung mit der Auswertung der einer Schweißnaht benachbarten Bereiche ist eine Aussage bzgl. des Einbrandes, der wichtigsten Kenngröße zur Prüfung einer Schweißnaht auf vorhandene Bindefehler, und ebenso eine Aussage über Wurzelfehler und Durchbrand möglich. Da sich zudem Oberflächentemperaturen sehr schnell messen lassen, können alle geschweißten Bauteile einer Qualitätskontrolle unterzogen werden, so dass ein aus lediglich stichprobenartigen Überprüfungen resultierendes Risiko einer Weitergabe von fehlerbehafteten Bauteilen ausgeschlossen werden kann.

Vorzugsweise erfolgt die Temperaturmessung berührungslos durch Detektion der abgegebenen Wärmestrahlung. Eine solche berührungslose Temperaturmessung erfolgt vorzugsweise durch den Einsatz eines Detektors, insbesondere einer Infrarotkamera mit einem Detektor, mit dem eine schnelle und zuverlässige Temperaturmessung ermöglicht ist. Als Detektor kommen Matrix-, Zeilen- oder Einzeldetektoren in Frage.

Besonders bevorzugt erfolgt die Erfassung der Wärmestrahlung durch einen Wärmestrahlung detektierenden Detektor, der sich mit der gleichen Geschwindigkeit entlang der Schweißnaht bewegt wie ein die Schweißnaht erzeugendes Werkzeug, beispielsweise ein Schweißbrenner. Dadurch ist gewährleistet, dass für jeden Punkt der Schweißnaht zwischen dessen Erzeugung und der Temperaturbestimmung die gleiche Zeitdifferenz vorliegt. Eine kinematische Umkehr, sprich eine Anordnung mit feststehendem Brenner, feststehendem Detektor und durchlaufenden Bauteilen ist ebenso möglich.

Die Erfindung wird nachfolgend anhand eines Ausführungsbeispiels mit Bezug auf die beifügten Zeichnungen näher erläutert.

Es zeigen:
- Figur 1: eine schematische perspektivische Ansicht einer Ausführungsform einer Vorrichtung zur zerstörungsfreien Qualitätsbestimmung mit zwei durch eine Schweißnaht verbundenen Bauteile,
- Figur 2: eine schematische Darstellung einer Anordnung eines Detektors zu zwei durch eine Schweißnaht verbundenen Bauteile, und
- Figur 3: eine Darstellung von zwei unterschiedlich durch eine Schweißnaht miteinander verbundene Bauteile sowie jeweiliger aus dieser Anbindung resultierender Wärmeübergangsdiagramme.

Mit einem Verfahren zur zerstörungsfreien Qualitätsbestimmung einer ein erstes Bauteil 1 und ein zweites Bauteil 2 verbindenden Schweißnaht 3 soll eine zuverlässige Qualitätsbestimmung der Schweißnähte erreicht werden, wobei die Qualitätsbestimmung parallel zu dem Schweißvorgang erfolgen soll, so dass eine Qualitätsbestimmung aller erzeugten Schweißnähte 3 ermöglicht ist. Ein Fügen von mehr als zwei Bauteilen durch eine Schweißnaht ist natürlich ebenfalls denkbar.

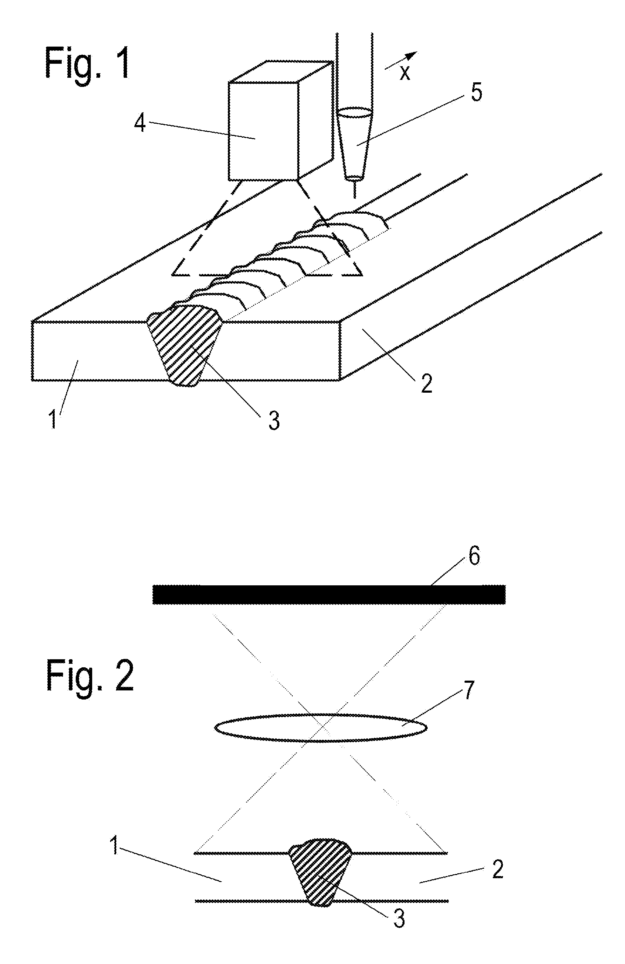

Dazu wird, wie in Figur 1 schematisch dargestellt, zunächst eine Messung der Oberflächentemperaturen der bei einem unmittelbar vorausgehenden Schweißvorgang erzeugten Schweißnaht 3 sowie der der Schweißnaht 3 benachbarten Bereiche des ersten Bauteils 1 und des zweiten Bauteils 2, welche durch den Schweißvorgang erwärmt werden, durchgeführt. Die Oberflächentemperaturen der der Schweißnaht 3 benachbarten Bereiche des ersten Bauteils 1 und des zweiten Bauteils 2 sind abhängig von der Effizienz der Wärmeleitung von der Schweißnaht 3 in die Schweißnahtumgebung. Die Wärmeleitung hängt direkt von Schweißnahtparametern wie der Anbindung an das an die Schweißnaht 3 angrenzende Material, die Position der Schweißnaht 3 relativ zu den zu fügenden Bauteilen 1, 2, aber auch von Anfangsbedingungen wie beispielsweise dem Spaltmaß oder der Orientierung der Bauteile 1, 2 relativ zueinander ab.

In einem zweiten Schritt wird aus den gemessenen Oberflächentemperaturen ein ortsabhängiges Wärmeprofil erstellt. Diese Wärmeprofil wird anschließend mit einem Sollprofil verglichen. Dabei gibt das Sollprofil den Idealzustand von zwei in optimaler Weise durch eine Schweißnaht 3 verbundene Bauteile 1, 2 wieder.

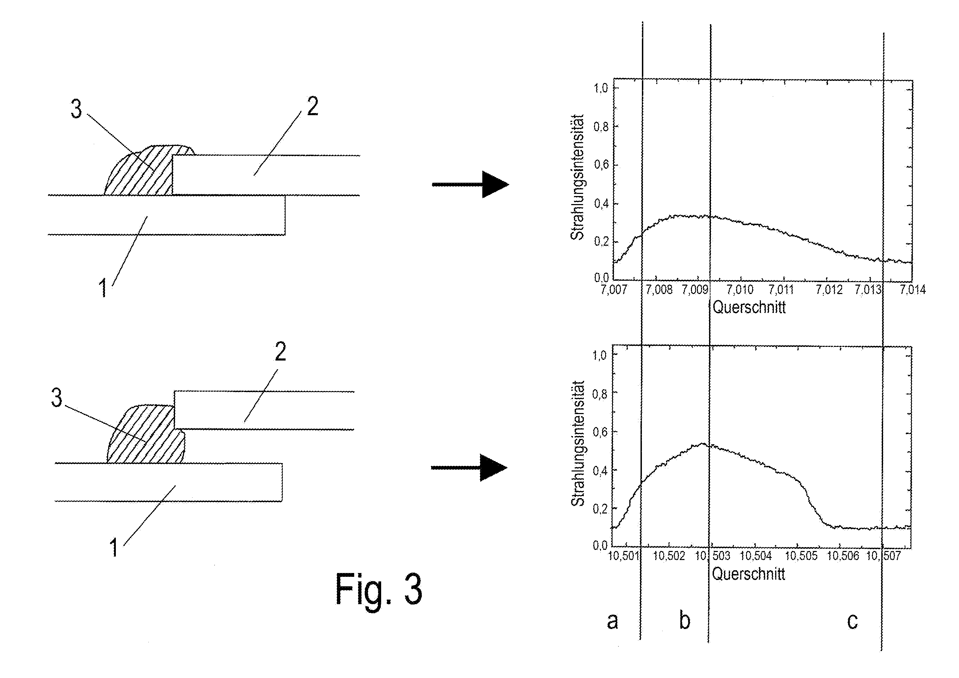

Die Figur 3 zeigt eine solche Gegenüberstellung einer Schweißnahtverbindung mit optimaler Anbindungsfläche (obere Abbildung der Figur 3) und einer schlechten Verbindung mit verringerter Anbindungsfläche (Figur 3 untere Bilder). Die schematischen Abbildungen auf der linken Seite der Figur 3 zeigen mögliche Fügungsgeometrien zweier durch eine Schweißnaht 3 verbundene Bauteile 1, 2. Dabei ist in der oberen linken Darstellung eine Schweißnaht 3 mit einer optimalen Anbindungsfläche an die jeweiligen Bauteile 1, 2 zu erkennen, während in dem unteren linken Bild die Schweißnaht 3 sich teilweise zwischen die beiden Bauteile 1, 2 geschoben hat, so dass die Anbindungsfläche der Schweißnaht 3 insbesondere zum zweiten Bauteil 2 verringert ist. Misst man nun die Oberflächentemperaturen dieser Anordnung bevorzugt senkrecht zur Längsausdehnung der Schweißnaht 3, so erhält man ein Wärmeprofil, wie es in den Diagrammen auf der rechten Seite der Figur 3 gezeigt ist. Die Diagramme sind in drei Zonen A, B und C eingeteilt, wobei in Zone A der kontinuierliche Wärmeübergang an der Schweißwurzel zu erkennen ist, Zone B zeigt die Strahlungsintensität im Bereich der Schweißschmelze und Zone C zeigt den Wärmeübergang in der Anbindung an das zweite Bauteil 2. Insbesondere in dieser Zone C zeigt sich eine signifikante Änderung des Wärmeübergangs bei kleiner Anbindungsfläche, zu erkennen an dem starken Abfall der Strahlungsintensitätskurve im unteren Diagramm.

Die Temperaturmessung selber erfolgt bevorzugt berührungslos durch Detektion der abgegebenen Wärmestrahlung. Dazu wird bevorzugt ein Messgerät 4 mit einem im infraroten Spektralbereich empfindlicher Detektor 6, beispielsweise als Bestandteil einer Infrarotkamera, eingesetzt. Dieser Detektor 6 ist bevorzugt als CCD-Sensor 6 ausgebildet, wobei dieser CCD-Sensor 6 vorzugsweise als Zeilen- oder Matrixsensor ausgebildet ist. Die Empfindlichkeit dieser Sensoren 6 liegt für diesen Anwendungsbereich im nahen infraroten Spektralbereich bei einer Wellenlänge von 0,7 bis 5 µm, bevorzugt bei 1 bis 3 µm.

Je nach gewünschter räumlicher Auflösung bzw. Breite der Schweißnaht 3 wird, wie in Figur 2 gezeigt, ein Objektiv 7 ausgewählt, mit dem dann das Temperaturprofil bzw. das Profil der emittierten Strahlung im oben genannten Spektralbereich auf dem Sensor 6 abgebildet wird.

Zur Qualitätsbestimmung der gesamten Schweißnaht 3 ist das Messgerät 4 verfahrbar in einem konstanten Abstand hinter einem die Schweißnaht 3 erzeugenden verfahrbaren Werkzeug 5 angeordnet. Das die Wärmestrahlung detektierende Messgerät 4 bewegt sich dabei bevorzugt mit der gleichen Geschwindigkeit entlang der Schweißnaht 3 in eine Verfahrrichtung x wie das die Schweißnaht 3 erzeugende Werkzeug 5.

Mit einer erfindungsgemäßen Schweißvorrichtung zur Erzeugung einer Schweißnaht 3 zwischen einem ersten Bauteil 1 und einem zweiten Bauteil 2, das eine Vorrichtung zur Durchführung eines Verfahrens zur zerstörungsfreien Qualitätsbestimmung einer Schweißnaht 3, wie sie oben beschrieben ist, aufweist, ist eine zuverlässige Überprüfung der Schweißnaht 3 im gesamten Bereich der Schweißnaht 3 ermöglicht. Insbesondere ist eine Aussage zu dem Einbrand, der wichtigsten Größe zur Prüfung auf Bindefehler einer Schweißnaht 3, dadurch ermöglicht, dass bei der in der erfindungsgemäßen Weise durchgeführten Qualitätsbestimmung der Schweißnaht 3 auch die an die Schweißnaht angrenzenden Randbereiche der miteinander verschweißten Bauteile 1, 2 in der Auswertung der Messung mit berücksichtigt sind.

### Bezugszeichenliste

- 1: erstes Bauteil
- 2: zweites Bauteil
- 3: Schweißnaht
- 4: Messgerät
- 5: Schweißwerkzeug
- 6: Detektor/Sensor
- 7: Objektiv
- x: Verfahrrichtung des Schweißwerkzeugs und des Detektors relativ zu den Bauteilen

## Patentansprüche

1. Verfahren zur zerstörungsfreien Qualitätsbestimmung einer ein erstes Bauteil (1) und ein zweites Bauteil (2) verbindenden Schweißnaht (3), aufweisend die folgenden Verfahrensschritte:
- Messen der Oberflächentemperaturen der bei einem unmittelbar vorausgehenden Schweißvorgang erzeugten Schweißnaht (3) sowie der der Schweißnaht (3) benachbarten durch den Schweißvorgang erwärmten Bereiche des ersten Bauteils (1) und des zweiten Bauteils (2);
- Erstellung eines ortsabhängigen Wärmeprofils aus den gemessenen Oberflächentemperaturen;
- Vergleich des erfassten Wärmeprofils mit einem Sollprofil.

2. Verfahren nach Anspruch 1, **dadurch gekennzeichnet, dass** die Temperaturmessung senkrecht zur Längsausdehnung der Schweißnaht (3) erfolgt.

3. Verfahren nach Anspruch 1 oder 2, **dadurch gekennzeichnet, dass** die Temperaturmessung berührungslos durch Detektion der abgegebenen Wärmestrahlung erfolgt.

4. Verfahren nach Anspruch 3, **dadurch gekennzeichnet, dass** das ein die Wärmestrahlung detektierendes Messgerät (4) die von der Schweißnaht (3) sowie von den der Schweißnaht (3) benachbarten Bereiche des ersten Bauteils (1) und des zweiten Bauteils (2) abgegebene Wärmestrahlung zeilenweise erfasst.

5. Verfahren nach Anspruch 4, **dadurch gekennzeichnet, dass** die zeilenweise Erfassung der Wärmestrahlung senkrecht zur Längsausdehnung der Schweißnaht (3) erfolgt.

6. Verfahren nach einem der Ansprüche 4 oder 5, **dadurch gekennzeichnet, dass** das die Wärmestrahlung detektierende Messgerät (4) sich mit der gleichen Geschwindigkeit entlang der Schweißnaht (3) bewegt wie ein die Schweißnaht (3) erzeugendes Werkzeug (5).

7. Vorrichtung zur Durchführung eines Verfahrens zur zerstörungsfreien Qualitätsbestimmung einer Schweißnaht (3) nach einem der vorhergehenden Ansprüche, **dadurch gekennzeichnet, dass** die Vorrichtung ein Messgerät (4) zur Messung einer Oberflächentemperatur sowie eine Auswerteeinheit zur Erstellung von Temperaturprofilen und deren Bewertung aufweist.

8. Vorrichtung nach Anspruch 7, **dadurch gekennzeichnet, dass** das Messgerät (4) einen Wärmestrahlung detektierenden Detektor (6) aufweist.

9. Vorrichtung nach Anspruch 8, **dadurch gekennzeichnet, dass** der Detektor (6) als Zeilensensor oder als Matrixsensor ausgebildet ist.

10. Vorrichtung nach Anspruch 8 oder 9, **dadurch gekennzeichnet, dass** der Detektor (6) eine spektrale Empfindlichkeit im nahen infraroten Bereich aufweist.

11. Vorrichtung nach einem der Ansprüche 8 bis 10, **dadurch gekennzeichnet, dass** der Detektor (6) als CCD-Sensor (6) ausgebildet ist.

12. Vorrichtung nach einem der Ansprüche 7 bis 11, **dadurch gekennzeichnet, dass** das Messgerät (4) mit einem Objektiv (7) zur Abbildung der emittierten Strahlung auf den CCD-Sensor (6) ausgebildet ist.

13. Vorrichtung nach einem der Ansprüche 7 bis 12, **dadurch gekennzeichnet, dass** das Messgerät (4) entlang der Schweißnaht (3) verfahrbar ausgebildet ist.

14. Schweißvorrichtung zur Erzeugung einer Schweißnaht (3) zwischen einem ersten Bauteil (1) und einem zweiten Bauteil (2), **gekennzeichnet durch** eine Vorrichtung zur Durchführung eines Verfahrens zur zerstörungsfreien Qualitätsbestimmung einer Schweißnaht (3) gemäß einem der Ansprüche 7 bis 13.

15. Schweißvorrichtung nach Anspruch 14, **dadurch gekennzeichnet, dass** die Vorrichtung zur Durchführung eines Verfahrens zur zerstörungsfreien Qualitätsbestimmung einer Schweißnaht (3) verfahrbar in einem konstanten Abstand hinter einem die Schweißnaht (3) erzeugenden verfahrbaren Werkzeug (5) angeordnet ist.
